# EUROPEAN PATENT APPLICATION

(11) **EP 2 374 853 A1**
(43) Date of publication of application: **12.10.2011**
(21) Application number: 10169538.5
(22) Date of filing: 14.07.2010
(51) Int. Cl.: C09J 7/00, C09J 179/00, C09J 179/04

(54) **Cyanate ester-based pressure sensitive adhesive**

(30) Priority: 12.04.2010 US 758054
(71) Applicant: CORNERSTONE RESEARCH GROUP, INC., Dayton, OH 45440 (US)
(72) Inventor: Hreha, Richard Douglas, Beavercreek, OH 45431 (US); Collins, Brittany Nicole, Xenia, OH 45385 (US)
(74) Representative: De Anna, Pier Luigi

(57) **Abstract**

The pressure sensitive adhesive disclosed is based on a multifunctional cyanate ester component. Monofunctional cyanate ester components and structural modifiers are incorporated to tailor the thermal and mechanical properties. The presence of crosslinks in the cyanate ester-based system also enhances the solvent resistance. While many types of PSAs consist of multiple components, all contributing to one aspect of the PSA's performance, the cyanate ester PSA does not require the use of plasticizers or other additives to stabilize mechanical performance over a wide temperature range. The simplicity of the system eases processing and prevents the possibility of degradation of the material over time.

## Description

### BACKGROUND OF THE INVENTION

### Field of the Invention

This invention relates generally to the composition of adhesives. More specifically this invention relates to the composition of pressure sensitive adhesives created from cyanate esters.

### Description of Related Art

An adhesive is generally defined as any material which will usefully hold two or more objects together solely by intimate surface contact. However, pressure sensitive adhesive ("PSA") is a term commonly used to designate a distinct category of adhesive tapes and adhesives which in dry (solvent free) form are aggressively and permanently tacky at room temperature and firmly adhere to a variety of dissimilar surfaces upon mere contact without the need of more than finger or hand pressure. They do not require activation by water, solvent or heat in order to exert a strong adhesive holding force toward such materials as paper, plastic, glass, wood, cement and metals. They have a sufficiently cohesive holding and elastic nature so that, despite their aggressive tackiness, they can be handled with the fingers and removed from smooth surfaces without leaving a residue. General trade usage by leading tape manufacturers does not sanction extension of the term "pressure-sensitive" to embrace tapes and adhesives merely because they are sticky (e.g. flypapers), or merely because they adhere or cohere to a particular type of surface (e.g. self-sealing envelopes); and terms other than "pressure-sensitive" should be used in such cases to avoid confusion.

Adhesives may be broadly divided in two classes: structural and pressure sensitive. To form a permanent bond, structural adhesives harden via processes such as evaporation of solvent (for example, white glue), reaction with Ultra Violet (UV) radiation (as in dental adhesives), chemical reaction (such as two-part epoxy), or cooling (as in hot melt). In contrast, PSAs form a bond simply by the application of light pressure to marry the adhesive with the adherend. Pressure sensitive adhesives are designed with a balance between flow and resistance to flow. The bond forms because the adhesive is soft enough to flow, or wet the adherend. The bond has strength because the adhesive is hard enough to resist flow when stress is applied to the bond. Once the adhesive and the adherend are in proximity, there are also molecular interactions such as Van der Waals forces involved in the bond, which contribute significantly to the ultimate bond strength. PSAs exhibit viscous and elastic properties, both of which are used for proper bonding.

Pressure sensitive adhesives are manufactured with either a liquid carrier or in one hundred percent solid form. Articles such as tapes and labels are made from liquid PSAs by coating the adhesive on a support and evaporating the organic solvent or water carrier, usually in a hot air dryer. The dry adhesive may be further heated to initiate a crosslinking reaction and increase molecular weight. One hundred percent solid PSAs may be low viscosity polymers that are coated and then reacted with radiation to increase molecular weight and form the adhesive (radiation cured PSA); or they may be high viscosity materials that are heated to reduce viscosity enough to allow coating, and then cooled to their final form (hot melt PSA).

Pressure-sensitive adhesives (PSAs) are now widely used in many consumer products, including labels, tapes, and similar constructions. Both acrylic and rubber-based PSAs are known. Many PSAs adhere well to only certain types of substrates and do not adhere or perform well when applied to other substrates. For example, Kraton RTM rubber-based hot-melt PSAs adhere extremely well to low-energy surfaces like polyolefins, but do not adhere as well to paper or corrugated board. Many acrylic-based PSAs exhibit good adhesion to paper, but do not adhere well to low-energy, non-polar surfaces. Although a tackifier can be added to acrylic adhesives to improve their adhesion to non-polar substrates, often this results in a lowering of shear, convertibility, and other performance characteristics. As PSAs continue to be used in a growing number of applications, a need has emerged for a truly "broad spectrum" PSA that performs well on a variety of surfaces and substrates. Additionally, a PSA that does not require the use of plasticizers or multiple components is desired.

### SUMMARY OF THE INVENTION

The pressure sensitive adhesive disclosed is based on a multifunctional cyanate ester component. Monofunctional cyanate ester components and structural modifiers are incorporated to tailor the thermal and mechanical properties. The presence of crosslinks in the cyanate ester-based system also enhances the solvent resistance. While many types of PSAs consist of multiple components, all contributing to one aspect of the PSA's performance, the cyanate ester PSA does not require the use of plasticizers or other additives to stabilize mechanical performance over a wide temperature range. The simplicity of the system eases processing and prevents the possibility of degradation of the material over time.

### DETAINED DESCRIPTION OF EXEMPLARY EMBODIMENTS

Currently, there is not an adhesive that can function well at extremely low or high temperatures and still be easily applied and removed. Normally, pressure sensitive adhesives (PSAs) are formulated for high or low temperature conditions, not both. This limits the temperature stability and window of operation for PSAs. In addition, the current PSAs are solvent-based systems, which make them susceptible to solvents. Additionally, current systems have poor electrical and dielectric properties as well. Lastly, PSAs are not compatible with space environments.

Current PSA are restricted to temperatures above -15°C and cannot withstand higher temperatures above 115 °C. In addition, the systems do not promote easy applique film repositioning/removal from aircraft surfaces while minimizing adhesive residue on platform substrates along with not having solvent resistance.

Two known applications need an adhesive with these properties. First, there exists a need to increase the performance of new aircraft paint-replacement coatings and this is driving the need for better solvent and temperature resistant pressure sensitive adhesive (PSA) systems to bond these coatings and other surfaces. The adhesive will be used with the coating for aircraft, automobiles, spacecraft, and recreational vehicles applications. The PSA needs to be able to withstand low temperatures (-55°C) along with being able to reach temperatures of 140 °C. The PSA must be able to withstand these extended operational temperatures for up to one thousand hours along with a 2 to 8 psi peel strength; this novel PSA must exceed the current PSAs available for thermal stability and solvent resistance. Removal of the PSA must be simple. The second application is the recent need for an adhesive that can withstand -150 °C conditions for application in radiators. The radiator needs an adhesive that will be able to perform well and keep all its properties in cryogenic conditions.

In order to solve these problems the disclosed PSA is based on a multifunctional cyanate ester component. Monofunctional cyanate ester components and structural modifiers can be incorporated into the adhesive to tailor the thermal and mechanical properties.

The first compound needed in the PSA is made from difunctional cyanate ester components containing a flexible linker between the cyanate groups. For example this group could be one or a combination of aliphatics, ethers, or siloxane based chains. To further modify the rheological properties and PSA performance the crosslink density is modified with a monofunctional cyanate ester. Further modification is achieved through the addition of low Tg structures terminated with active hydrogen moieties. These are the structural modifiers listed below. The order of addition at this stage is critical and must be accomplished by first mixing the monofunctional material with the structural modifier thus forming an intermediate that can be added directly to the difunctional cyanate ester. Failure to do this results in gelation and improcessability.

### Example 1

The following example is a synthesis of one possible difunctional component mentioned above, namely 1,3-bis-(3'-(2-cyanatophenyl)propyl)-polydimethylsiloxane. To make this monomer in the process starts with a pressure safe, sealable 500 ml round bottom flask containing an inert atmosphere to which is added 150.0 grams of hydride terminated polydimethylsiloxane (molecular weight 1000-1100) and 98.0 grams of 2-allyl phenol, and 100 ml of toluene. After stirring the mixture for a period of twenty minutes, 1 ml of a platinum-divinyl tetramethyldisiloxane complex in vinyl silicone (3.0-3.5% platinum concentration) is added in 0.2 ml aliquots. The addition of each aliquot will cause an exothermic reaction to occur. Each aliquot is added after the reaction has once again reached room temperature. After the addition of the final aliquot, the reaction is heated in a 120°C oil bath for a period of fifteen hours. The reaction mixture is allowed to cool and is filtered through a celite filter. The solvent is removed under reduced pressure. The intermediate product, component A, is isolated and purified by vacuum distillation.

To a sealed 1000 ml three neck round bottom flask is added component A (200g), cyanogen bromide (35.35g) and 750 ml of dichloromethane. The flask is cooled and maintained at -30 °C. Triethylamine (33.77g) is added slowly over a period of one hour. After the addition of the triethylamine is complete, the reaction is allowed to stir for ten minutes. The reaction is then allowed to reach and is maintained at -15°C for thirty minutes and 0 °C for thirty minutes after which it is allowed to reach room temperature. The reaction is washed five times in a separatory funnel with 0.5 N HCl (200ml), followed by washing five times with distilled water (200ml). The reaction mixture is dried with magnesium sulfate and the product is isolated under reduced pressure.

In the preferred embodiment of the present invention a 1,1-bis(2-cyanatophenyl) compound containing a siloxane based bridging unit having a repeat between 1 and 14 is the primary multifunctional component of the investigated PSA.

Any compound having one cyanate ester moiety per molecule could be used as the monofunctional monomer. Suitable monomers include but are not limited to: 4-nonylphenyl cyanate ester, 4-phenylphenyl cyanate ester, 4-cumylphenol cyanate ester (4-CPCY), and phenyl cyanate ester.

Types of catalyst that may be used include, but are not limited to, acids, bases, nitrogen or phosphorus compounds, transition metal salts or complexes, such as metal salts of aliphatic and aromatic carboxylic acids, tertiary amines, combinations thereof and the like. Particularly suitable catalysts include, for example, cobalt octoate, cobalt naphthenate, cobalt acetylacetonate (Co(AcAc) 3), zinc octoate, zinc naphthenate, tin octoate, diazobicyclo-(2,2,2)-octane, triethylamine, combinations thereof and the like, often in combination with active hydrogen containing co-catalysts. The co-catalysts both serve as a solvent for the transition metal catalyst and aids in the ring closure of the triazine ring via hydrogen transfer. Suitable co-catalysts include alkyl phenols such as nonylphenol, bisphenols, alcohols, imidazoles or aromatic amines. Special organometallic initiators such as tricarbonylcyclo-pentadienyl manganese (CpMn(CO) 3) can also be used to allow the cyanate ester SMP resins to be cured by irradiation of UV light or electron beam at a lower curing temperature. These catalysts are employed in amounts of from about 0.0001% to about 2.0%, and more preferably from about 0.01% to about 0.1 % percent by weight based on total polycyanate resin.

Additionally, structural modifiers may be used to allow for the PSA to be designed for a specific Tg, toughness, and flexibility depending on the desired specifications. In the preferred embodiment the structural modifier is diaminopropylpoly(dimethylsiloxane) (DMS-A12) having a molecular weight between 700 and 1500 g/mol. Examples of structural modifiers include but not limited to those listed below as well as their fluorinated derivatives: Poly(butadiene), hydroxyl terminated; Poly(butadiene), hydroxyl functionalized; Poly(isoprene), hydroxyl terminated; Poly(isoprene), hydroxyl functionalized; Poly(chloroprene), hydroxyl terminated; Poly(chloroprene) hydroxyl functionalized; Poly(tetrahydrofuran); Poly(terathydrofuran) bis(3-aminopropyl) terminated; Poly(propylene glycol); Poly(ethylene glycol)-block-poly(propylene glycol)-block-poly(ethylene glycol); Poly(propylene glycol)bis(2-aminopropylether); Poly(1,4-butanediol)bis(4-aminobenzoate); Chitosan; Poly(2-methyl-1,3-propylen glutarate) hydroxyl terminated; Poly(lauryllactam)-block-poly(tetrahydrofuran); Poly(dimethylsiloxane) hydroxyl terminated; Ethylene glycol bis(propylene glycol-B-ethylene glycol) ether; Poly(acrylonitrile-co-butadiene), amine terminated; Poly(1,4-phenylene ether-ether sulfone) hydroxyl terminated; Poly(sulfone) hydroxyl terminated; Poly(phenyl sulfone) hydroxyl terminated; Poly(dimethylsiloxane), dihydroxy terminated; Poly(diphenylsiloxane), dihydroxy terminated; Poly(dimethylsiloxane-co-diphenylsiloxane), dihydroxy terminated; Poly(2-methyl-1,3-propylene glutarate), hydroxyl terminated; Poly(tetrafluoro ethylene oxide-codifluoromethylene oxide) α,ω-diol; Poly(vinyl chloride-co-vinyl acetate-co-vinyl alcohol); 1,3-propanediol; 1,2-propanediol; 2-methyl-1,3-propanediol; neopentyl glycol; 2-ethyl-2-methyl-1,3-propanediol; 2,2-diethyl-1,3-propanediol; 2-methyl-2-propyl-1,3-propanediol; 2-butyl-2-ethyl-1,3-propanediol; 1,4-butanediol; 1,3-butanediol; 1,2-butanediol; 2,3-butanediol; 3,3-dimethyl-1,2-butanediol; 1,5-pentanediol; 1,4-pentanediol; 1,2-pentanediol; 2,4-pentanediol; 2-methyl-2,4-pentanediol; 2-methyl-2,4-pentanediol; 2,4-dimethyl-2,4-pentanediol; 2,2,4-trimethyl-1,3-pentanediol; 1,6-hexanediol; 1,5-hexanediol; 1,3-hexanediol; 2,5-hexanediol; 2-ethyl-1,3-hexanediol; 2,5-dimethyl-2,5-hexanediol; 1,7-hexanediol; 1,8-octanediol; 1,2-octanediol; 1,9-nonanediol; 1,10-decanediol; 1,2-decanediol; 1,12-dodecanediol; 1,2-dodecanediol; 1,14-tetradecanediol; 1,2-tetradecanediol; 1,16-hexadecanediol; 1,2-hexadecanediol; 1,4-cyclehexanediol; 4,4'-isopropylidenedicyclohexanol; Cis-1,5-cyclooctanediol; Cis-exo-2,3-norbornanediol; 1,5-decalindiol; 3-fluoro-1,2-propanediol; 2,2,3,3,4,4-hexafluoro-1,5-pentanediol; 2,2,3,3,4,4,5,5-octafluoro-1,6-hexanediol; 2,2,3,3,4,4,5,5,6,6,7,7,8,8,9,9-hexadecafluoro-1,10-decanedi ol; 1,2,6-trihydroxyhexane; 1,2-diaminopropane; 1,3-diaminopropane; 1,4-diaminobutane; 1,5-diaminopentane; 2,2-dimethyl-1,3-propanediamine; hexamethylenediamine; dytek A amine; 1,7-diaminoheptane; 1,8-diaminooctane; 1,9-diaminononane; 1,10-diaminodecane; 1,12-diaminododecane; N-methylethylenediamine; N-ethylethylenediamine; N-propylethylethylenediamine; N-isopropylethylenediamine; N,N'-dimethylethylenediamine; N,N'-diethylethylenediamine; N,N'-diisopropylethylenediamine; N-propyl-1,3-propanediamine; N-isopropyl-1,3-propanediamine; N,N'diisopropyl-1,3-propanediamine; 2-butyl-2-ethyl-1,5-pentanediamine; N,N'-dimethyl-1,6-hexanediamine; 3,3-diamino-N-methyldipropylamine; N-(3-aminopropyl)-1,3-propanediamine; 3,3'-iminobis(N,N'-dimethylpropylamine); 1,8-diamino-P-menthane; 5-amino-1,3,3-trimethylcyclohexanemethylamine; 2,2-(ethylenedioxy)-bis(ethylamine); 4,9-dioxa-1,12-dodcanediamine; 4,7,10-trioxa-1,13-tridecanediamine; 3-amino-1-propanol; 4-amino-1-butanol; 2-amino-1-butanol; 5-amino-1-pentanol; 6-amino-1-hexanol; 2-amino-2-methyl-1-propanol; 2-(2-aminoethoxy)ethanol; 2-(methylamino)ethanol; DL-2-amino-1-hexanol; 2-(ethylamino)ethanol; 2-(propylamino)ethanol; 2-(tert-Butylamino)ethanol; Diethanolamine; Diisopropanolamine; N,N'-bis(2-hydroxyethyl)-ethylenediamine; 2-(butylamino)ethanethiol; 3-pyrrolidinol; 3-piperidinemethanol; 3-piperidineethanol; 3-piperidinepropanol; 3-piperidinebutanol; 4-hydroxypiperidine; 4,4'-trimethylenebis(1-piperidineethanol); 4,4'-trimethylenedipiperidine; 4-(aminomethyl)piperidine; 3-(4-aminobutyl)piperidine; N, N'-bis(2,2,6,6-tetramethyl-4-piperidinyl)-1,6-hexanediamine; 1,4,10-trioxa-7,13-diazacyclopentadecane; 1,4-butanedithiol; 2,3-butanedithiol; 1,5-pentanedithiol; 1,6-hexanedithiol; 1,8-octanedithiol; 1,9-nonanedithiol; 3-mercapto-1-propanol; 3-mercapto-2-butanol; 2-mercaptoethyl ether; 2,2'-thiodiethanol; 2-hydroxyethyl disulfide; 3,6-dithia-1,8-octanediol; 3,3'-thiodipropanol; 3-methylthio-1,2-propanediol; 2-mercaptoethyl sulfide; di(ethylene glycol); di(propylene glycol); tri(ethylene glycol); tri(propylene glycol); tetra(ethylene glycol); penta(ethylene glycol); hexa(ethylene glycol); 1,1'bi-2-napthol; 1,5-dihydroxynapthalene; 1,6-dihydroxynapthalene; 2,6-dihydroxynaphthalene; 2,7-dihydroxynapthalene; 4,4'-(9-fluorenylidene)-diphenol; anthrarobin; bis(2-hydroxyphenyl)methane; hydroquinone; methyoxyhydroquinone; diethylstilbestrol; bis(4-hydroxyphenyl)methane; bisphenol A; 4,4-(hexafluoroisopropylidene)diphenol; 2,2-bis(4-hydroxy-3-methylphenyl)propane; Meso-hexestrol; Nordihydroguaiaretic acid; Hydrobenzoin; Benzopinacole; 2,2'-(1,2-phenylenedioxy)diethanol; 2,2-dimethyl-1-phenyl-1,3-propanediol; 3-hydroxybenzyl alcohol; 1,3-benzendimethanol; Alpha, alpha, alpha', alpha'-tetramethyl-1,3-benzenedimethanol; Alpha, alpha, alpha', alpha'-tetrakis(trifluoromethyl)-1,3-benzenedimethanol; 3-aminobenzyl alcohol; 1,4-benzenedimethanol; 3-hydroxy-4-methoxybenzyl alcohol; 2,2'-biphenyldimethanol; 2-benzyloxy-1,3-propanediol; 2-(2-hydroxyethoxy)phenol; 4-hydroxyphenethyl alcohol; 3-(4-methoxyphenyl)-1-propanol; hydroquinone bis(2-hydroxyethyl)ether; homovanillyl alcohol; 1,4-benzenedimethanethiol; 1,2-benzenedithiol; 1,2-benzenedimethanethiol; 1,3-benzenedithiol; 1,3-benzenedimethanethiol; 4-chloro-1,3-benzenedithiol; 2,4,6-trimethyl-1,3-benzenedimethanethiol; 3-tert-butyl-4-hydroxy-5-methylphenyl sulfide; 3-tert-butyl-4-hydroxy-2-methylphenyl sulfide; 2,2'-thiobis(4-tert-octylphenol); 4-(methylthio)benzyl alcohol; 4,4'-thiodiphenol; 4,4'thiobisbenzenethiol; 2-aminophenol; 2-aminobenzyl alcohol; 2-aminophenethyl alcohol; 2-aminothiophenol; 2-aminophenyl disulfide; 3-aminophenol; 3-aminobenzyl alcohol; 3-aminophenethyl alcohol; 3-aminothiophenol; 3-(1-hydroxyethyl)aniline; 4,4'-ethylenedianiline; 3,3'-methylenedianiline; 4,4'methylenedianiline; 4,4'-oxydianiline; 4",4"'-(hexafluoroisopropylidene)-bis(4-phenoxyaniline); 3-aminophenol; 4-aminothiophenol; 4,4'thiodianiline; 4-aminophenethyl alcohol; o-tolidine; 4,4'-ethylenedi-m-toluidine; 5,5'-(hexafluoroisopropylidene)-di-o-toluidine; 5-amino-2-methoxyphenol; 2-amino-3-methylbenzyl alcohol; 4,4'-methylenebis(2,6-dimethylaniline); 4,4'-methylenebis(2,6-diethylaniline); 4,4'-methylenebis(2,6-diisopropylaniline); 3,3',5,5'-tetramethylbenzidine; 1,2-phenylenediamine; N-methyl-1,2-phenylenediamine; 2,3-diaminotoluene; 1,3-phenylenediamine; N,N'-diphenyl-1,4-phenylenediamine; N,N'-diphenylbenzidine; N-phenyl-1,4-phenyldiamine; N-methyl-4,4'-methylenediailine; 3,3'(hexafluoroisopropylidene)dianiline; 4,4'-(hexafluoroisopropyledene)dianiline; 3,3'-dimethoxybenzidine; 3-hydroxydiphenylamine; N-(4-hydroxyphenyl)-2-naphthylamine; 3,3'-dimethylnaphthidine; 1,5-diaminonaphthalene; 2,7-diaminofluorene; 3,7-diamino-2-methoxyfluorene; 2-amino-9-hydroxyfluorene; 2-aminobenzylamine; 4-aminobenzylamine; Tyramine; 2',6'-dihydroxyacetophenone; 2',4'-dihydroxyacetophenone; 2',5'-dihydroxyacetophenone; 2',4'-dihydroxypropiophenone; 2',5'-dihydroxypropiophenone; 4,4'-dihydroxybenxophenone; 4,4'-diaminobenzophenone.

### Example 2

To make one of the monomers used in the PSA, 0.56g 4-CPCY and 1.0g DMS-A12 was added to a small vial with a stir bar. The vial was placed on a hot plate to heat and mix. After heating and mixing for a couple minutes, 3.89g CPPTS was added to the vial. The heat was turned off, but it continued to mix. The described mixture was polymerized by heating through a cure cycle of 125°C. and 135°C. for two hours each, then 150°C. and 200 °C. for four hours. To prepare the PSA a mold was fabricated consisting of a 3" by 3" glass plate with a Viton^{®} ring encompassing the mold area. The reaction mixture formulated above was poured into the area encircled by the Viton^{®}. The mold was sealed by placing a 3" by 3" glass plate on top of the Viton^{®} ring. The two sheets of glass were held together by clamps around the edges. The Viton^{®} spacer also acts as a sealant in the mold. After the sample was cured for the specified period of time, it was removed from the oven and demolded by freezing and then applying a slight prying force at the edges of the mold. At the conclusion of this polymerization process a transparent orange sheet of a cured PSA was obtained.

Cyanate ester-based PSAs exhibits superior thermal stability; polyurethanes undergo chain-cleaving hydrolysis at higher temperatures, and acrylates are susceptible to thermally initiated de-polymerization at moderate temperatures. However, cyanate esters exhibit excellent thermal stability at temperatures well beyond 300 °F. The presence of crosslinks in the cyanate ester-based system also enhances the solvent resistance. While many types of PSAs consist of multiple components, all contributing to one aspect of the PSA's performance, the cyanate ester PSA does not require the use of plasticizers or other additives to stabilize mechanical performance over a wide temperature range. The simplicity of the system eases processing and prevents the possibility of degradation of the material over time. The cyanate ester-based PSA can be designed and tested to ensure the high tensile and peel strength, while minimizing the heat or tooling required for removal. The optimization of strength and modulus will result in adhesive failure upon removal and have easy removal of the residue.

## Claims

1. A pressure sensitive adhesive comprising: a multifunctional cyanate ester and a monofunctional monomer with one cyanate ester moiety per molecule which are combined in the presence of at least one catalyst creating a pressure sensitive cyanate ester adhesive.

2. The adhesive according to claim 1 wherein said multifunctional cyanate ester is a difunctional cyanate ester components containing a flexible bridging unit between the cyanate groups.

3. The adhesive according to claim 2 wherein said bridging unit could be one or a combination of aliphatics, ethers, or siloxane based chains.

4. The adhesive according to claim 1, wherein said monomer is selected from the group consisting of 4-nonylphenyl cyanate ester, 4-phenylphenyl cyanate ester, 4-cumylphenol cyanate ester (4-CPCY), and phenyl cyanate ester.

5. The adhesive according to claim 1, wherein the catalyst is selected from acids, bases, nitrogen or phosphorus compounds, metal salts of aliphatic and aromatic carboxylic acids, tertiary amines, and combinations thereof

6. The adhesive according to claim 5, wherein said catalyst is selected from the group consisting of cobalt octoate, cobalt naphthenate, cobalt acetylacetonate (Co(AcAc)₃), zinc octoate, zinc naphthenate, tin octoate, diazobicyclo-(2,2,2)-octane, triethylamine and combinations thereof.

7. The adhesive according to claim 1, further comprising a co-catalyst comprising alkyl phenols such as nonylphenol, bisphenols, alcohols, imidazoles or aromatic amines.

8. The adhesive according to claim 1 further comprising an organometallic initiator in amounts of from about 0.0001% to about 2.0%, and more preferably from about 0.01 % to about 0.1 % percent by weight based on total polycyanate resin.

9. The adhesive according to claim 8, wherein said initiator is tricarbonylcyclo-pentadienyl manganese (CpMn(CO)₃).

10. The adhesive according to claim 1, further comprising structural modifiers as well as their fluorinated derivatives, wherein said modifiers are selected from the group consisting of: Poly(butadiene), hydroxyl terminated; Poly(butadiene), hydroxyl functionalized; Poly(isoprene), hydroxyl terminated; Poly(isoprene), hydroxyl functionalized; Poly(chloroprene), hydroxyl terminated; Poly(chloroprene) hydroxyl functionalized; Poly(tetrahydrofuran); Poly(terathydrofuran) bis(3-aminopropyl) terminated; Poly(propylene glycol); Poly(ethylene glycol)-block-poly(propylene glycol)-block-poly(ethylene glycol); Poly(propylene glycol)bis(2-aminopropylether); Poly(1,4-butanediol)bis(4-aminobenzoate); Chitosan; Poly(2-methyl-1,3-propylen glutarate) hydroxyl terminated; Poly(lauryllactam)-block-poly(tetrahydrofuran); Poly(dimethylsiloxane) hydroxyl terminated; Ethylene glycol bis(propylene glycol-B-ethylene glycol) ether; Poly(acrylonitrile-co-butadiene), amine terminated; Poly(1,4-phenylene ether-ether sulfone) hydroxyl terminated; Poly(sulfone) hydroxyl terminated; Poly(phenyl sulfone) hydroxyl terminated; Poly(dimethylsiloxane), dihydroxy terminated; Poly(diphenylsiloxane), dihydroxy terminated; Poly(dimethylsiloxane-co-diphenylsiloxane), dihydroxy terminated; Poly(2-methyl-1,3-propylene glutarate), hydroxyl terminated; Poly(tetrafluoroethylene oxide-codifluoromethylene oxide) α,ω-diol; Poly(vinyl chloride-co-vinyl acetate-co-vinyl alcohol); 1,3-propanediol; 1,2-propanediol; 2-methyl-1,3-propanediol; neopentyl glycol; 2-ethyl-2-methyl-1,3-propanediol; 2,2-diethyl-1,3-propanediol; 2-methyl-2-propyl-1,3-propanediol; 2-butyl-2-ethyl-1,3-propanediol; 1,4-butanediol; 1,3-butanediol; 1,2-butanediol; 2,3-butanediol; 3,3-dimethyl-1,2-butanediol; 1,5-pentanediol; 1,4-pentanediol; 1,2-pentanediol; 2,4-pentanediol; 2-methyl-2,4-pentanediol; 2-methyl-2,4-pentanediol; 2,4-dimethyl-2,4-pentanediol; 2,2,4-trimethyl-1,3-pentanediol; 1,6-hexanediol; 1,5-hexanediol; 1,3-hexanediol; 2,5-hexanediol; 2-ethyl-1,3-hexanediol; 2,5-dimethyl-2,5-hexanediol; 1,7-hexanediol; 1,8-octanediol; 1,2-octanediol; 1,9-nonanediol; 1,10-decanediol; 1,2-decanediol; 1,12-dodecanediol; 1,2-dodecanediol; 1,14-tetradecanediol; 1,2-tetradecanediol; 1,16-hexadecanediol; 1,2-hexadecanediol; 1,4-cyclehexanediol; 4,4'-isopropylidenedicyclohexanol; Cis-1,5-cyclooctanediol; Cis-exo-2,3-norbomanediol; 1,5-decalindiol; 3-fluoro-1,2-propanediol; 2,2,3,3,4,4-hexafluoro-1,5-pentanediol; 2,2,3,3,4,4,5,5-octafluoro-1,6-hexanediol; 2,2,3,3,4,4,5,5,6,6,7,7,8,8,9,9-hexadecafluoro-1,10-decanedi ol; 1,2,6-trihydroxyhexane; 1,2-diaminopropane; 1,3-diaminopropane; 1,4-diaminobutane; 1,5-diaminopentane; 2,2-dimethyl-1,3-propanediamine; hexamethylenediamine; dytek A amine; 1,7-diaminoheptane; 1,8-diaminooctane; 1,9-diaminononane; 1,10-diaminodecane; 1,12-diaminododecane; N-methylethylenediamine; N-ethylethylenediamine; N-propylethylethylenediamine; N-isopropylethylenediamine; N,N'-dimethylethylenediamine; N,N'-diethylethylenediamine; N,N'-diisopropylethylenediamine; N-propyl-1,3-propanediamine; N-isopropyl-1,3-propanediamine; N,N'diisopropyl-1,3-propanediamine; 2-butyl-2-ethyl-1,5-pentanediamine; N,N'-dimethyl-1,6-hexanediamine; 3,3-diamino-N-methyldipropylamine; N-(3-aminopropyl)-1,3-propanediamine; 3,3'-iminobis(N,N'-dimethylpropylamine); 1,8-diamino-P-menthane; 5-amino-1,3,3-trimethylcyclohexanemethylamine; 2,2-(ethylenedioxy)-bis(ethylamine); 4,9-dioxa-1,12-dodcanediamine; 4,7,10-trioxa-1,13-tridecanediamine; 3-amino-1-propanol; 4-amino-1-butanol; 2-amino-1-butanol; 5-amino-1-pentanol; 6-amino-1-hexanol; 2-amino-2-methyl-1-propanol; 2-(2-aminoethoxy)ethanol; 2-(methylamino)ethanol; DL-2-amino-1-hexanol; 2-(ethylamino)ethanol; 2-(propylamino)ethanol; 2-(tert-Butylamino)ethanol; Diethanolamine; Diisopropanolamine; N,N'-bis(2-hydroxyethyl)-ethylenediamine; 2-(butylamino)ethanethiol; 3-pyrrolidinol; 3-piperidinemethanol; 3-piperidineethanol; 3-piperidinepropanol; 3-piperidinebutanol; 4-hydroxypiperidine; 4,4'-trimethylenebis(1-piperidineethanol); 4,4'-trimethylenedipiperidine; 4-(aminomethyl)piperidine; 3-(4-aminobutyl)piperidine; N, N'-bis(2,2,6,6-tetramethyl-4-piperidinyl)-1,6-hexanediamine; 1,4,10-trioxa-7,13-diazacyclopentadecane; 1,4-butanedithiol; 2,3-butanedithiol; 1,5-pentanedithiol; 1,6-hexanedithiol; 1,8-octanedithiol; 1,9-nonanedithiol; 3-mercapto-1-propanol; 3-mercapto-2-butanol; 2-mercaptoethyl ether; 2,2'-thiodiethanol; 2-hydroxyethyl disulfide; 3,6-dithia-1,8-octanediol; 3,3'-thiodipropanol; 3-methylthio-1,2-propanediol; 2-mercaptoethyl sulfide; di(ethylene glycol); di(propylene glycol); tri(ethylene glycol); tri(propylene glycol); tetra(ethylene glycol); penta(ethylene glycol); hexa(ethylene glycol); 1,1'bi-2-napthol; 1,5-dihydroxynapthalene; 1,6-dihydroxynapthalene; 2,6-dihydroxynaphthalene; 2,7-dihydroxynapthalene; 4,4'-(9-ffuorenylidene)-diphenol; anthrarobin; bis(2-hydroxyphenyl)methane; hydroquinone; methyoxyhydroquinone; diethylstilbestrol; bis(4-hydroxyphenyl)methane; bisphenol A; 4,4-(hexafluoroisopropylidene)diphenol; 2,2-bis(4-hydroxy-3-methylphenyl)propane; Meso-hexestrol; Nordihydroguaiaretic acid; Hydrobenzoin; Benzopinacole; 2,2'-(1,2-phenylenedioxy)diethanol; 2,2-dimethyl-1-phenyl-1,3-propanediol; 3-hydroxybenzyl alcohol; 1,3-benzendimethanol; Alpha, alpha, alpha', alpha'-tetramethyl-1,3-benzenedimethanol; Alpha, alpha, alpha', alpha'-tetrakis(trifluoromethyl)-1,3-benzenedimethanol; 3-aminobenzyl alcohol; 1,4-benzenedimethanol; 3-hydroxy-4-methoxybenzyl alcohol; 2,2'-biphenyldimethanol; 2-benzyloxy-1,3-propanediol; 2-(2-hydroxyethoxy)phenol; 4-hydroxyphenethyl alcohol; 3-(4-methoxyphenyl)-1-propanol; hydroquinone bis(2-hydroxyethyl)ether; homovanillyl alcohol; 1,4-benzenedimethanethiol; 1,2-benzenedithiol; 1,2-benzenedimethanethiol; 1,3-benzenedithiol; 1,3-benzenedimethanethiol; 4-chloro-1,3-benzenedithiol; 2,4,6-trimethyl-1,3-benzenedimethanethiol; 3-tert-butyl-4-hydroxy-5-methylphenyl sulfide; 3-tert-butyl-4-hydroxy-2-methylphenyl sulfide; 2,2'-thiobis(4-tert-octylphenol); 4-(methylthio)benzyl alcohol; 4,4'-thiodiphenol; 4,4'thiobisbenzenethiol; 2-aminophenol; 2-aminobenzyl alcohol; 2-aminophenethyl alcohol; 2-aminothiophenol; 2-aminophenyl disulfide; 3-aminophenol; 3-aminobenzyl alcohol; 3-aminophenethyl alcohol; 3-aminothiophenol; 3-(1-hydroxyethyl)aniline; 4,4'-ethylenedianiline; 3,3'-methylenedianiline; 4,4'methylenedianiline; 4,4'-oxydianiline; 4",4"'-(hexafluoroisopropylidene)-bis(4-phenoxyaniline); 3-aminophenol; 4-aminothiophenol; 4,4'thiodianiline; 4-aminophenethyl alcohol; o-tolidine; 4,4'-ethylenedi-m-toluidine; 5,5'-(hexafluoroisopropylidene)-di-o-toluidine; 5-amino-2-methoxyphenol; 2-amino-3-methylbenzyl alcohol; 4,4'-methylenebis(2,6-dimethylaniline); 4,4'-methylenebis(2,6-diethylaniline); 4,4'-methylenebis(2,6-diisopropylaniline); 3,3',5,5'-tetramethylbenzidine; 1,2-phenylenediamine; N-methyl-1,2-phenylenediamine; 2,3-diaminotoluene; 1,3-phenylenediamine; N,N'-diphenyl-1,4-phenylenediamine; N,N'-diphenylbenzidine; N-phenyl-1,4-phenyldiamine; N-methyl-4,4'-methylenediailine; 3,3'(hexafluoroisopropylidene)dianiline; 4,4'-(hexafluoroisopropyledene)dianiline; 3,3'-dimethoxybenzidine; 3-hydroxydiphenylamine; N-(4-hydroxyphenyl)-2-naphthylamine; 3,3'-dimethylnaphthidine; 1,5-diaminonaphthalene; 2,7-diaminofluorene; 3,7-diamino-2-methoxyfluorene; 2-amino-9-hydroxyfluorene; 2-aminobenzylamine; 4-aminobenzylamine; Tyramine; 2',6'-dihydroxyacetophenone; 2',4'-dihydroxyacetophenone; 2',5'-dihydroxyacetophenone; 2',4'-dihydroxypropiophenone; 2',5'-dihydroxypropiophenone; 4,4'-dihydroxybenxophenone; 4,4'-diaminobenzophenone.

11. The adhesive according to claim 10, wherein the structural modifier is diaminopropyl-poly(dimethylsiloxane) (DMS-A12) having a molecular weight between 700 and 1500g/mol.

12. Use of the adhesive according to one of the preceding claims, in the coatings for aircraft, automobiles, spacecraft, and recreational vehicles applications, and for application in radiators.
